# EUROPEAN PATENT SPECIFICATION

(11) **EP 3 381 026 B1**
(45) Date of publication and mention of the grant of the patent: **04.03.2020**
(21) Application number: 16823327.8
(22) Date of filing: 22.11.2016
(51) Int. Cl.: F16P 3/14, G02C 11/00

(54) **PROTECTIVE SYSTEM WITH SMART INTEGRATED SYSTEM FOR DETECTING INTERFERENCE BETWEEN PEOPLE ON FOOT AND FORK-LIFT TRUCKS/MOVING MEANS**
SCHUTZSYSTEM MIT INTELLIGENTEM INTEGRIERTEM SYSTEM ZUR ERKENNUNG VON INTERFERENZEN ZWISCHEN PERSONEN ZU FUSS UND GABELSTAPLERN/BEWEGUNGSMITTELN
SYSTÈME PROTECTEUR AVEC SYSTÈME INTÉGRÉ INTELLIGENT POUR DÉTECTER DES INTERFÉRENCES ENTRE DES PERSONNES À PIED ET DES CHARIOTS ÉLÉVATEURS OU DES MOYENS DE DÉPLACEMENT

(30) Priority: 25.11.2015 IT UB20159238
(43) Date of publication of application: 03.10.2018
(73) Proprietor: Valente, Giuseppe, 66054 Vasto (CH) (IT); Tambelli, Beniamino, 66050 San Salvo (CH) (IT)
(72) Inventor: Valente, Giuseppe, 66054 Vasto (CH) (IT); Tambelli, Beniamino, 66050 San Salvo (CH) (IT)
(74) Representative: Nesti, Antonio
(86) International application number: PCT/IB2016/057034
(87) International publication number: WO 2017/089954

(56) References cited:
- EP-A1- 2 469 323
- EP-A2- 2 778 854
- WO-A1-2012/015752
- WO-A1-2015/013240
- WO-A1-2016/048704
- US-A1- 2013 141 576

## Description

### Sector of the invention

The invention relates to the sector of personal safety in work-site areas, and in particular to a system for detecting any possible interference between a person on foot and a fork-lift truck or in general a moving means of any sort.

### Prior art

Collision-detection systems for detecting collision between a person on foot and a fork-lift truck/moving means that are so far known are aimed at alerting the driver of the means and not directly persons walking in the area who risk being hit by said vehicles. For instance, the patent application WO 2015/121818 A2 (ADVANCED MICROWAVE ENGINEERING S.R.L.) 20 August 2015 (20.08.15) regards a system that detects interference between moving vehicles and possible mobile obstacles (objects or people on foot) using the signal of detection of the presence of said obstacle for creating an alarm on board the vehicle to inform the driver.

From WO2015013240 it is known a pedestrian warning system monitoring the attention level of pedestrians and alerting the pedestrian of traffic areas or detected vehicles, including a wearable radar reflector incorporated into a garment worn by a pedestrian and provided with a retroreflector configured to reflect radiation received from a vehicle.

From WO2016048704 it is disclosed an information system provided with audio, visual, or haptic alerts, to provide to pedestrian an alert related to hazards, and which can detect hazardous objects with which a pedestrian is likely to collide.

From US2013141576 techniques for ability enhancement are described, comprising a wearable device to present a warning to an user and configured to perform vehicular threat detection based on information received at a road-based device and to analyzes information to determine threat information, such as that the vehicle may collide with the user.

The present innovative system, instead, interacts directly, from a distance of safety, with the person on foot, who is subject to risk, giving him the possibility of putting himself out of danger in time.

### Purpose of the invention

### Technical problem

One of the main dangers known in various working environments is that of people on foot being hit by moving means. There exist multiple procedures that, within various contexts, it is possible to implement to reduce the known risks, but no personal protective equipment (PPE) interacts so as to alert directly people on foot who run the risk of being hit in industrial environments, on building sites, in public worksites, and in the agricultural sector.

### Summary of the invention

### Solutions of the technical problem

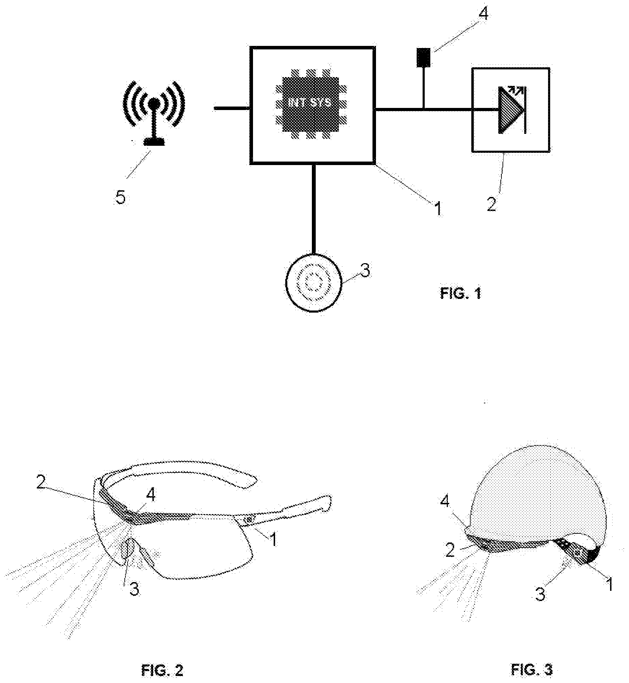

The present innovative system renders the PPE smart by enabling it to alert the person on the ground of the imminent danger via a visual and perceptive signal issued from a safety distance. The alarm generated leads the person to recognise the alert by attracting his or her attention in the direction of the origin of the moving danger. The invention will now be described with particular reference to Figure 1 by showing, by way of example, a mode of operation of the smart integrated system and specifically of the frame for protective lenses represented in Figure 2.

### List of the drawings

Figure 1. Smart integrated system.
Figure 2. Frame for protective lenses with the smart integrated system.
Figure 3. Protective helmet with the smart integrated system.
Figure 4. Bracelet with the smart integrated system.

### Detailed description

The frame for protective lenses with the smart integrated system (Figure 2), and the protective helmet with the smart integrated system (Figure 3) are possible details of embodiment that may vary, without thereby departing from the scope of the invention and hence from the sphere of protection of the patent.

### Description of the drawings

Figure 1 represents the smart integrated system. This system comprises a chip or control unit 1, in which a software resides that detects the alert identifier 5, analyses an optical pointer or optical sensor 4, and activates, upon generation of the alarm, a visual LED signal, or light tool, 2, and a perceptive shock, or shock device, 3.

According to the diagram of Figure 1, the control unit 1 of the smart integrated system according to the invention interprets a danger-identification signal 5 and, via the resident software, activates a light alarm 2 and a vibrating perceptive alarm 3, which, in use, is applied on a sensitive part of the face of the person on foot so that it is possible to alert him of an imminent risk of being hit even in markedly noisy environments.

According to the invention, the vibrating alarm will be preferably recognised automatically by the unit 1 after the person on foot has directed his attention towards the origin of the danger, thanks to an optical pointer 4.

Advantageously, the system always leaves the hands of the person who is wearing the integrated system free.

In use, multiple risks may generate multiple alarms, each of which may be managed independently.

Furthermore, it will be possible to configure various dangers, including ones that do not derive from means that are moving, by creating visual alarms of different colours.

Figure 2 represents the frame for protective lenses with the smart integrated system, said frame being equipped with a control unit 1, a light tool 2 comprising a light-emitting support, a shock device 3 comprising a vibrating bridge, and an optical sensor 4.

Presented in Figure 3 is the protective helmet with the smart integrated system, equipped with a control unit 1, a light tool 2 comprising a light-emitting support, a shock device 3 comprising an adjustable vibrating strap, and an optical sensor 4.

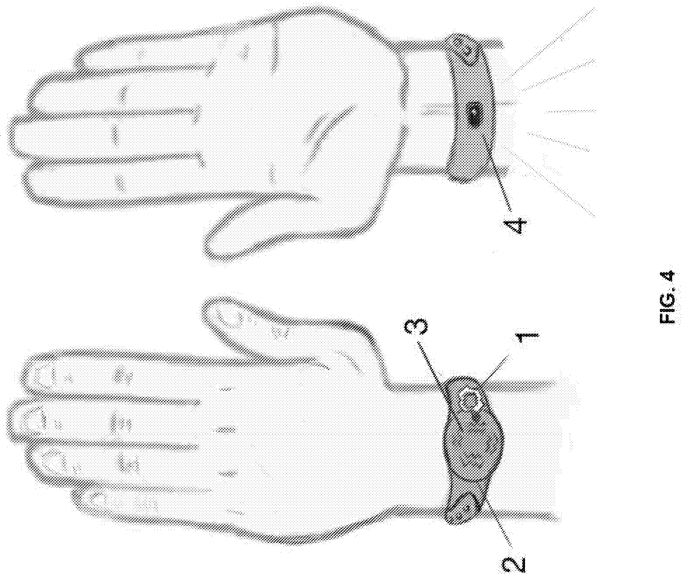

Illustrated in Figure 4 is an example of application to a bracelet, where the same reference numbers are used as the ones introduced above.

### Operation

An example of embodiment of the invention, the system envisages means for detection of risks of interference between moving means and people on foot, which comprise, on board each said moving means an optical transmitter and a transmitter for transmitting, preferably via RF, a code or serial identification number.

The personal protective equipment (PPE) provided with the system according to the invention is in turn equipped with an optical-pointer receiver 4, and, in the proximity of the moving means that might constitute danger, receives from the moving means its serial number.

From then on, if the person wearing the PPE remains in the area of risk, by orienting the sensor 4 of the PPE towards the moving means, thanks to the optical receiver and to the use of a smart logic of the control unit 1, a means-acknowledgement signal is generated.

The control unit 1 of each PPE will then generate a dynamic data structure of all the means present in the proximity, whether their presence has been acknowledged or not. On the basis of this information, it will activate a visual and perceptive/vibrating alarm signal, or simply a visual alert signal.

For instance, in the case of the bracelet, acknowledgement of the presence of the moving means will be obtained by orienting the optical pointer 4 in the direction of the moving means but with the hand raised, as if the person wearing the bracelet were waving to or acknowledging the presence of the driver.

The smart system integrated in the frame for protective lenses illustrated in Figure 2 detects arrival of the moving means at a safety distance, immediately alerting the person on foot who is wearing the safety glasses with a visual signal, using a LED integrated in the frame in the region of the forehead, and a perceptive signal thanks to a shock device integrated in the bridge of the frame, which generates mechanical oscillations proportional to the distance of detection in one of the most sensitive areas of the human face. At the moment when the person on foot directs his own attention towards the moving means, he acknowledges the danger and hence the source of the alarm. In this case, the bridge of the glasses ceases to vibrate leaving active only the visual signal as long as the person remains in the area of danger. This system helps the person to identify rapidly arrival of one or more moving means simultaneously from different directions, attracting the person's attention even in the cases of limited visibility, blind corners, and cumbersome loads. The innovative system integrated in the frame for protective lenses saves the life of the person even in environments with a high background noise, thanks to the vibrating effect on one of the most sensitive areas of the face. Reset of the vibrating alarm generated is performed automatically when the user directs his own attention towards the moving means. This makes it possible for the person to acknowledge a number of dangers arriving from different directions by simply looking at all of them without the need to use his hands to stop the alarm.

### Industrial application

The smart system can be integrated in personal protective equipment to provide safety in regard to the risk of collision between moving means and persons.

### Advantages

The present invention eliminates the risk of people on foot being hit by moving means by directly alerting, from a safety distance, the person on the ground. The flexibility of the innovative system referred to herein also makes it possible to process the data on the various cases of interference between persons on foot and moving means with the dangers configured, in order to carry out appropriate analyses of unsafe behaviours and hence situations of "near miss" with the sole aim of applying the Kaizen philosophy of continuous improvement in one of the most important sectors so that the main activity where the system according to the invention is implemented will be successful.

### Variants

The system may be configured by creating identifications of different classes of danger in addition to the dangers deriving from moving means associated to which are different colourings. The smart system integrated in the frame for protective lenses may be implemented according to different variants applied to personal protective equipment of other types, for example, a protective helmet, a bracelet, or other devices, without thereby departing from the context of the operating logic.

## Claims

1. A protection system comprising:
personal protective equipment that can be worn by a person on foot;
interference-detection means, adapted to detect at 5 least one condition of interference between said person on foot when wearing said personal protective equipment and a fork-lift truck or a moving means, of the type provided with detection and actuation mechanisms;
visual alert means (2), which are integrated in said personal protective equipment, are in a position normally visible to said person on foot when wearing said personal protective equipment, are operatively connected to said interference-detection means, and can be activated upon command for issuing an optical alert associated to said at least one condition of interference;
vibrating alert means (3), which are integrated in said personal protective equipment, adapted to be in a position of contact with said person on foot when wearing said personal protective equipment, are operatively connected to said interference-detection means, and can be activated upon command for issuing a vibrating alert associated to said at least one condition of interference; and
activation means (1), which are integrated in said personal protective equipment, and are operatively connected to movement-detection means for activating said visual and vibrating alert means in response to detection of 25 said at least one interference so as to detect any interference between said person on foot when wearing said personal protective equipment and a fork-lift truck/moving means by interacting directly with said person on foot when wearing said personal protective equipment through visual and perceptive vibrating stimuli, **characterised in that** it comprises optical detection means (4) integrated in said personal protective equipment and operatively connected to said activation means (1) for deactivating at least said vibrating alert means in response to optical detection of the fork-lift truck or moving means that is the cause of said at least one condition of interference.

2. The system according to Claim 1, wherein said personal protective equipment comprises a spectacle frame.

3. The system according to Claim 2, wherein:
said optical detection means comprise an optical-detection system set in a support for lenses;
said visual alert means comprise a light-actuation system set on a top part of the support for lenses;
said vibrating alert means comprise a perceptive actuation system based upon a generator of mechanical oscillations, which is located on a bridge of the frame; and
said activation means comprise a control unit that contains software for managing interaction logic, provided in an arm of the frame.

4. The system according to Claim 1, wherein said personal protective equipment comprises a protective helmet.

5. The system according to Claim 4, wherein:
said optical detection means comprise a system of optical detection set on a top part of a support for lenses;
said visual alert means comprise a light-actuation system set on the top part of said support for lenses;
said vibrating alert means comprise a perceptive actuation system based upon a generator of mechanical oscillations, which is located on an adjustable strap; and
said activation means comprise a control unit that contains software for managing interaction logic, preferably provided on an adjustable strap.

6. The system according to Claim 1, wherein said personal protective equipment comprises a bracelet.

7. The system according to any one of the preceding claims, wherein said vibrating alert means generate mechanical oscillations proportional to a detection distance.

8. The system according to any one of the preceding claims, wherein said control unit associates different colourings of said visual alert means to different conditions of interference.

9. The system according to any one of the preceding claims, wherein said interference-detection means comprise, on board each potentially interfering moving means, an optical transmitter and a transmitter of a code or serial identification number, which is adapted for being transmitted preferably via RF.

## Patentansprüche

1. Schutzsystem umfassend:
eine persönliche Schutzausrüstung, die von einem Fußgänger getragen werden kann;
ein Interferenz-Detektionsmittel, welches dazu ausgelegt ist, zumindest einen Zustand der Interferenz zwischen dem Fußgänger, während er die persönliche Schutzausrüstung trägt, und einem Gabelstapler oder einem Fortbewegungsmittel zu erkennen, von der mit Erfassungs- und Betätigungsmechanismen ausgestatteten Art;
visuelle Warnmittel (2), die in die persönliche Schutzausrüstung integriert sind, sich in einer Position befinden, welche normalerweise für den Fußgänger sichtbar ist, während er die persönliche Schutzausrüstung trägt, operativ mit dem Interferenz-Detektionsmittel verbunden sind und auf einen Befehl zur Ausgabe einer mit dem zumindest einen Zustand der Interferenz verknüpften optischen Warnung hin aktiviert werden können;
vibrierende Warnmittel (3), die in die persönliche Schutzausrüstung integriert und dazu ausgerichtet sind, sich in einer Kontaktposition mit dem Fußgänger, während er die persönliche Schutzausrüstung trägt, zu befinden, operativ mit dem Interferenz-Detektionsmittel verbunden sind und auf einen Befehl zur Ausgabe einer mit dem zumindest einen Zustand der Interferenz verknüpften vibrierenden Warnung hin aktiviert werden können; und
Aktivierungsmittel (1), die in die persönliche Schutzausrüstung integriert und operativ mit Bewegungserfassungsmitteln verbunden sind, um die visuellen und vibrierenden Warnmittel als Reaktion auf das Erfassen der zumindest einen Interferenz zu aktivieren, um jede Interferenz zwischen dem Fußgänger, während er die persönliche Schutzausrüstung trägt, und einem Gabelstapler/Fortbewegungsmittel zu erfassen, durch direktes Interagieren mit dem Fußgänger, während er die persönliche Schutzausrüstung trägt, durch visuelle und perzeptiv vibrierende Reize, **dadurch gekennzeichnet,**
**dass** es optische Erfassungsmittel (4) umfasst, die in die persönliche Schutzausrüstung integriert und operativ mit den Aktivierungsmitteln (1) verbunden sind, um zumindest die vibrierenden Warnmittel als Reaktion auf die optische Erfassung des Gabelstaplers oder Fortbewegungsmittels, der/das die Ursache des zumindest einen Zustands der Interferenz ist, zu deaktivieren.

2. System nach Anspruch 1, wobei die persönliche Schutzausrüstung ein Brillengestell umfasst.

3. System nach Anspruch 2, wobei:
die optischen Erfassungsmittel ein optisches Erfassungssystem, welches in eine Halterung für Linsen gesetzt ist, umfassen;
die visuellen Warnmittel ein Lichtauslösesystem umfassen, das in einem oberen Teil der Halterung für Linsen platziert ist;
die vibrierenden Warnmittel ein perzeptives Auslösesystem umfassen, basierend auf einem Generator von mechanischen Schwingungen, der sich auf einer Brücke des Rahmens befindet; und
die Aktivierungsmittel eine Steuereinheit umfassen, die Software zur Verwaltung von Interaktionslogik beinhaltet und die in einem Arm des Rahmens angeordnet ist.

4. System nach Anspruch 1, wobei die persönliche Schutzausrüstung einen Schutzhelm umfasst.

5. System nach Anspruch 4, wobei:
die optischen Erfassungsmittel ein System zur optischen Erfassung umfassen, das in einem oberen Teil einer Halterung für Linsen platziert ist;
die visuellen Warnmittel ein Lichtauslösesystem umfassen, das in dem oberen Teil der Halterung für Linsen platziert ist;
die vibrierenden Warnmittel ein perzeptives Auslösesystem umfassen,
basierend auf einem Generator von mechanischen Schwingungen, welcher sich an einem verstellbaren Band befindet; und
die Aktivierungsmittel eine Steuereinheit umfassen, die Software zum Verwalten von Interaktionslogik beinhaltet und bevorzugt an einem verstellbaren Band angeordnet ist.

6. System nach Anspruch 1, wobei die persönliche Schutzausrüstung ein Armband umfasst.

7. System nach einem der vorhergehenden Ansprüche, wobei das vibrierenden Warnmittel mechanische Schwingungen proportional zu einem Erfassungsabstand erzeugt.

8. System nach einem der vorhergehenden Ansprüche, wobei die Steuereinheit verschiedene Farbgestaltungen der visuellen Warnmittel mit verschiedenen Zuständen der Interferenz verknüpft.

9. System nach einem der vorhergehenden Ansprüche, wobei die Interferenz-Detektionsmittel, an Bord jedes potenziell interferierenden Fortbewegungsmittels, einen optischen Sender und einen Sender einer Kennziffer oder Seriennummer umfassen, die dazu ausgelegt ist, bevorzugt per HF übermittelt zu werden.

## Revendications

1. Système de protection comprenant :
un équipement de protection individuelle qui peut être porté par une personne à pied ;
des moyens de détection d'interférence, conçus pour détecter au moins une condition d'interférence entre ladite personne à pied lorsqu'elle porte ledit équipement de protection individuelle et un chariot élévateur ou un moyen de déplacement, du type muni de mécanismes de détection et d'actionnement ;
des moyens d'alerte visuelle (2), qui sont intégrés dans ledit équipement de protection individuelle, sont dans une position normalement visible pour ladite personne à pied lorsqu'elle porte ledit équipement de protection individuelle, sont connectés de manière fonctionnelle auxdits moyens de détection d'interférence, et peuvent être activés sur commande pour émettre une alerte optique associée à ladite au moins une condition d'interférence ;
des moyens d'alerte vibratoire (3), qui sont intégrés dans ledit équipement de protection individuelle, conçus pour être dans une position de contact avec ladite personne à pied lorsqu'elle porte ledit équipement de protection individuelle, sont connectés de manière fonctionnelle auxdits moyens de détection d'interférence, et peuvent être activés sur commande pour émettre une alerte vibratoire associée à ladite au moins une condition d'interférence ; et
des moyens d'activation (1), qui sont intégrés dans ledit équipement de protection individuelle, et sont connectés de manière fonctionnelle aux moyens de détection de mouvement pour activer lesdits moyens d'alerte visuelle et vibratoire en réponse à la détection de ladite au moins une interférence afin de détecter une quelconque interférence entre ladite personne à pied lorsqu'elle porte ledit équipement de protection individuelle et un chariot élévateur/moyen de déplacement par une interaction directe avec ladite personne à pied lorsqu'elle porte ledit équipement de protection individuelle à travers des stimuli visuels et perceptifs vibratoires, **caractérisé en ce qu'**il comprend des moyens de détection optique (4) intégrés dans ledit équipement de protection individuelle et connectés de manière fonctionnelle auxdits moyens d'activation (1) pour désactiver au moins lesdits moyens d'alerte vibratoire en réponse à la détection optique du chariot élévateur ou du moyen de déplacement qui est la cause de ladite au moins une condition d'interférence.

2. Système selon la revendication 1, dans lequel ledit équipement de protection individuelle comprend une monture de lunettes.

3. Système selon la revendication 2, dans lequel :
lesdits moyens de détection optique comprennent un système de détection optique installé dans un support pour verres ;
lesdits moyens d'alerte visuelle comprennent un système d'actionnement de lumière installé sur une partie supérieure du support pour verres ;
lesdits moyens d'alerte vibratoire comprennent un système d'actionnement perceptif basé sur un générateur d'oscillations mécaniques, qui est situé sur un pont de la monture ; et
lesdits moyens d'activation comprennent une unité de commande qui contient un logiciel pour gérer une logique d'interaction, fournie dans une branche de la monture.

4. Système selon la revendication 1, dans lequel ledit équipement de protection individuelle comprend un casque protecteur.

5. Système selon la revendication 4, dans lequel :
lesdits moyens de détection optique comprennent un système de détection optique installé sur une partie supérieure d'un support pour verres ;
lesdits moyens d'alerte visuelle comprennent un système d'actionnement de lumière installé sur la partie supérieure dudit support pour verres ;
lesdits moyens d'alerte vibratoire comprennent un système d'actionnement perceptif basé sur un générateur d'oscillations mécaniques, qui est situé sur une sangle réglable ; et
lesdits moyens d'activation comprennent une unité de commande qui contient un logiciel pour gérer une logique d'interaction, de préférence fournie sur une sangle réglable.

6. Système selon la revendication 1, dans lequel ledit équipement de protection individuelle comprend un bracelet.

7. Système selon l'une quelconque des revendications précédentes, dans lequel lesdits moyens d'alerte vibratoire génèrent des oscillations mécaniques proportionnelles à une distance de détection.

8. Système selon l'une quelconque des revendications précédentes, dans lequel ladite unité de commande associe différentes colorations desdits moyens d'alerte visuelle à différentes conditions d'interférence.

9. Système selon l'une quelconque des revendications précédentes, dans lequel lesdits moyens de détection d'interférence comprennent, à bord de chaque moyen de déplacement potentiellement interférant, un émetteur optique et un émetteur d'un code ou d'un numéro d'identification de série, qui est conçu pour être émis de préférence via radiofréquence, RF.
